# EUROPEAN PATENT SPECIFICATION

(11) **EP 4 489 297 B1**
(45) Date of publication and mention of the grant of the patent: **04.11.2026**
(21) Application number: 23908992.3
(22) Date of filing: 31.05.2023
(51) Int. Cl.: H02S 20/32

(54) **FLEXIBLE TRACKING SUPPORT**
FLEXIBLE VERFOLGUNGSHILFE
SUPPORT DE SUIVI FLEXIBLE

(30) Priority: 26.12.2022 CN 202223571458 U
(43) Date of publication of application: 08.01.2025
(73) Proprietor: Arctech Solar Holding Co., Ltd., Kunshan Suzhou, Jiangsu 215331 (CN)
(72) Inventor: LIU, Haijun, Suzhou, Jiangsu 215331 (CN); YANG, Ying, Suzhou, Jiangsu 215331 (CN)
(74) Representative: ABG Intellectual Property Law, S.L.
(86) International application number: PCT/CN2023/097435
(87) International publication number: WO 2024/139045

(56) References cited:
- CN-A- 106 452 323
- CN-A- 109 361 348
- CN-A- 110 492 838
- CN-A- 110 492 838
- CN-U- 214 480 424
- CN-U- 214 480 424
- CN-U- 218 829 784
- JP-A- 2018 019 455
- JP-A- 2018 019 455
- US-A1- 2011 155 218

## Description

### FIELD OF THE DISCLOSURE

This disclosure relates to a technical field of photovoltaic technology, specifically to a flexible tracking bracket.

### BACKGROUND

In existing photovoltaic flexible brackets, most of them are fixed flexible brackets, wherein the photovoltaic modules installed on these brackets have a fixed angle relative to the ground. These brackets cannot drive the photovoltaic modules to rotate and to change their angle to track the sun's azimuth, resulting in less radiation received by the photovoltaic modules and reduced power generation.

The driving devices used in existing photovoltaic tracking brackets, such as rotary drives, are mostly mounted on a mounting seat at the top of the columns. These devices are configured to withstand significant force in the direction of gravity but cannot withstand large axial tension. The steel cables at both ends of the flexible brackets exert substantial tension on the beam. Deploying the aforementioned driving devices may reduce the driving stability and the precision of the rotation angle, potentially leading to premature failure of the driving device and to reduced service life.

Document CN 110 492 838 A discloses a flexible beam multi-point driving photovoltaic tracking support and photovoltaic device.

### SUMMARY OF THE INVENTION

This disclosure aims to solve the above issues by providing a flexible tracking bracket that effectively improves the load-bearing capacity of the rotating node, features a compact structure, and is easy to install.

The technical solution adopted in this disclosure is as follows.

A flexible tracking bracket, characterized by comprising:
columns, wherein multiple columns are spaced apart on a base surface;
bases, wherein each base is provided at a top of each column;
rotating beams, pivotally arranged on the bases;
flexible bearing bodies, comprising at least two bearing cables, wherein each end of each bearing cable is connected between two adjacent rotating beams, and the flexible bearing bodies are used to support photovoltaic modules;
driving devices, wherein each base is equipped with a driving device, and the driving device comprises a driving end, connected to a corresponding rotating beam, and multiple driving devices synchronously drive the corresponding rotating beams to rotate.

By providing the bearing cables, the bracket can meet the requirements of large spans and complex terrains. By providing the driving device, the flexible bearing body can adjust the tilt angle of the photovoltaic modules, improving the environmental adaptability and the benefits of photovoltaic power plants.

According to the claimed invention, the base comprises a base plate, and further comprises a first support plate and a second support plate that are both vertically arranged on two sides of the base plate; wherein the first support plate, the second support plate, and the base plate constitute a receiving cavity, and the driving device and the rotating beam are arranged within the receiving cavity, and the driving device is arranged close to the first support plate, and the rotating beam is arranged close to the second support plate; and
the driving device comprises a housing, a rotating body arranged within the housing that can rotate relative to the housing, and a motor mounted on the housing, wherein the motor is used to drive the rotating body to rotate, and the housing is fixed on the first support plate, and the rotating body is connected to the rotating beam.

By arranging the rotating beams and driving devices in the receiving cavity, the installation space is minimized, the structure is compact, the components are few, and it is not easy to jam, the installation is convenient, and maintenance costs are low.

According to the claimed invention, the driving device comprises a rotary drive, wherein the rotary drive comprises the housing and a worm-gear mechanism arranged within the housing, and the worm-gear mechanism comprises a worm and a worm wheel meshing with the worm, and the worm wheel constitutes the rotating body, and the worm is connected to the driving end of the motor.

By deploying a worm-gear rotary drive, the radial and axial load-bearing capacity of the driving device is improved, and it has a reverse self-locking function, which can withstand lateral and vertical forces transmitted by the flexible bearing body.

In some embodiments, the first support plate, the second support plate, and the rotating beam is each provided with a through-hole wherein the through-holes are corresponding to each other, and a first bolt is inserted from one side of the first support plate sequentially into the through-hole of the first support plate, the driving device, the through-hole of the rotating beam, and the through-hole of the second support plate, and then secured, thus connecting the first support plate and the second support plate.

By connecting the first support plate and the second support plate with the first bolt, two support plates share the lateral force, improving the resistance of the base against lateral forces. The first bolt passes through the through-hole of the first support plate, the driving device, the through-hole of the rotating beam, and the through-hole of the second support plate, aligning the forces transmitted from the driving device's housing to the base and those transmitted by the first bolt, resulting in a minimal torque and deformation of the base, enhancing its load-bearing capacity.

In some embodiments, the through-hole of the second support plate is provided with a bearing, wherein the bearing features a bearing cavity, and a sleeve is fixed within the through-hole of the rotating beam, and two ends of the sleeve extend beyond the rotating beam, and the first bolt passes through an inside of the sleeve, and one end of the sleeve is inserted into the bearing cavity, and is configured to rotate around an axis of the through-hole of the second support plate.

By configuring the bearing and the sleeve, the first bolt only needs to bear tensile forces without vertical shear forces, simplifying the stress state and avoiding the risk of damage under complex stress conditions. The sleeve and the bearing reduce the deformation of the base and the friction with the through-hole in the second support plate during rotation, ensuring a stable and smooth rotation.

In some embodiments, the bearing comprises a circular column section and a first annular section provided on an outer wall of one end of the circular column section, wherein an outer diameter of the first annular section is greater than a diameter of the through-hole of the second support plate, and the circular column section is inserted into the through-hole of the second support plate from the receiving cavity, then one end of the sleeve is inserted into the bearing cavity, and the rotating beam and the first annular section is configured to restrict an axial movement of the bearing.

Some embodiments further comprise a diagonal cable, wherein one end of the diagonal cable is connected to the second support plate, and another end of the diagonal cable is connected to the base surface.

By providing diagonal cables, the overall tensile strength of the flexible tracking bracket is enhanced, reducing the load-bearing requirements of the columns and bases, saving materials and lowering costs.

In some embodiments, the diagonal cable is connected to the second support plate through a first connection structure and connected to the base surface through a second connection structure.

In some embodiments, the rotating body is connected to a side of the rotating beam through a connecting piece.

In some embodiments, the connecting piece is a flange, wherein one end of the flange is fixedly connected to the rotating body through one or more second bolts, and another end is welded to the side of the rotating beam.

By connecting the flange and the rotating body with second bolts, installation and disassembly are convenient. Welding the flange to the rotating beam avoids weakening the cross-sectional strength by openings in the rotating beam.

In some embodiments, the connecting piece is a hollow tube, wherein a side wall of the rotating beam facing the driving device is provided with a protrusion, and the protrusion extends into the hollow tube and is fixed by a fastener passing through the protrusion and a side wall of the hollow tube.

This disclosure provides a flexible tracking bracket with at least one of the following beneficial effects:
1. The flexible tracking bracket reduces material costs by using a flexible bearing body while allowing the bracket to adapt to larger spans and more complex terrains.
2. The flexible tracking bracket adjusts the tilt angle of the photovoltaic modules with the driving device, enhancing environmental adaptability and improving the benefits of photovoltaic power plants.
3. The flexible tracking bracket, with the rotating beam directly connected to the driving device and arranged in the receiving cavity, has a compact structure, a small footprint, few components, is not easy to jam, and is easy to install with low maintenance costs.
4. The flexible tracking bracket uses a worm-gear rotary drive to improve the radial and axial load-bearing capacity of the driving device, has a reverse self-locking function, and can withstand lateral and vertical forces transmitted by the flexible bearing body.
5. The flexible tracking bracket connects the first and second support plates with a first bolt, allowing both plates to share lateral forces, improving the base's resistance to lateral loads. The forces transmitted from the driving device's housing to the base and those transmitted by the first bolt are aligned, resulting in minimal torques and deformation, enhancing the base's load-bearing capacity.
6. The flexible tracking bracket uses the bearing and the sleeve to ensure that the first bolt only bears tensile force without vertical shear forces, simplifying the stress state and avoiding damage risk under complex stress conditions. The sleeve and the bearing reduce the deformation of the base and the friction during rotation, ensuring a stable and smooth rotation.
7. The flexible tracking bracket, with diagonal cables, enhances overall tensile strength, reduces the load-bearing requirements of the columns and bases, saves materials, and lowers costs.
8. The flexible tracking bracket connects the flange and the rotating body with second bolts for convenient installation and disassembly, and welds the flange to the rotating beam to avoid weakening the cross-sectional strength through openings.

### BRIEF DESCRIPTION OF THE DRAWINGS

The preferred embodiments of a flexible tracking bracket will be further explained in a clear and understandable manner in conjunction with the accompanying drawings, illustrating the aforementioned characteristics, technical features, advantages, and implementation methods of the flexible tracking bracket:
FIG. 1 is an overall structural schematic of this disclosure.
FIG. 2 is an exploded view of a node in this disclosure.
FIG. 3 is another angle of the exploded view of the node in this disclosure.
FIG. 4 is a schematic of a driving device in this disclosure.
FIG. 5 is a schematic of a bearing in this disclosure.
FIG. 6 is a schematic of a diagonal cable connection in this disclosure.

Explanation of the reference numbers:
Column 1, Base 2, Base plate 21, First support plate 22, Second support plate 23, Receiving cavity 24, Through-hole 25, Rotating beam 3, Bearing cable 41, Driving device 5, Housing 51, First housing 511, Second housing 512, Rotating body 52, First bolt 6, Bearing 7, Bearing cavity 71, Circular column section 72, First annular section 73, Sleeve 8, Diagonal cable 9, First connection structure 10, Second connection structure 11, Flange 12, Photovoltaic module 13.

### DESCRIPTION OF THE ILLUSTRATED EMBODIMENTS

To explain the technical solutions in the embodiments of this disclosure or the prior art more clearly, the following specific implementations are described in conjunction with the drawings. It is evident that the drawings described below are merely some embodiments of this disclosure. Those skilled in the art can obtain other drawings and implementations based on these drawings without creative effort.

For simplicity in the illustrations, only parts relevant to this disclosure are schematically shown in each figure. They do not represent the actual structure of products. Additionally, to make the drawings simple and easy to understand, some figures only schematically show one of the identical structures or functions, or only mark one of them. In this document, "one" not only means "only one" but can also indicate "more than one".

Furthermore, it should be understood that the term "and/or" used in the description and claims of this disclosure refers to any and all possible combinations of the listed items and includes such combinations.

In this document, unless otherwise specified and limited, terms like "install," "connect," and "link" should be broadly understood. For example, they can be fixed connections, detachable connections, or integral connections; mechanical or electrical connections; direct or indirect connections through intermediaries; or internal connections between two components. Those skilled in the art can understand the specific meanings of these terms in this disclosure based on specific situations.

Moreover, in the description of this disclosure, terms such as "first" and "second" are only used to distinguish descriptions and should not be understood as indicating or implying relative importance.

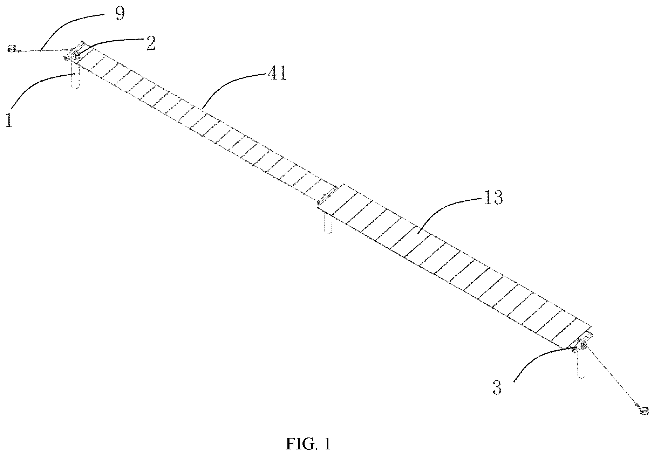

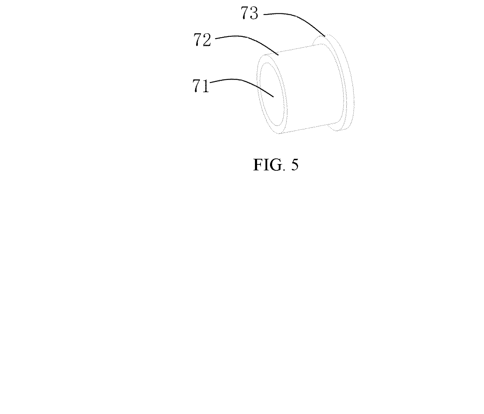

Referring to FIG. 1 to FIG. 6, specific embodiments of a flexible tracking bracket in this disclosure are described. The flexible tracking bracket comprises: columns 1, wherein multiple columns 1 are spaced on a base surface (not marked in the figure), which can be the top of a building, plain, hill, mountain, lake, desert, or Gobi, without being limited in this disclosure; base 2, provided at the top of each column 1; rotating beam 3, pivotally provided on base 2; flexible bearing body, comprising at least two bearing cables 41, with each end of each bearing cable 41 connected between two adjacent rotating beams 3, for carrying photovoltaic modules 13; driving device 5, installed on each base 2, comprising a driving end connected to a corresponding rotating beam 3, wherein multiple driving devices 5 synchronously drive the corresponding rotating beams 3 to rotate.

In this embodiment, the bearing cables 41 are preferably steel cables or steel strands, which have large load-bearing capacity, long service life, and low cost. The number of bearing cables can be selected based on the length of photovoltaic modules 13. The cross-sectional profile of column 1 is preferably circular for better stability.

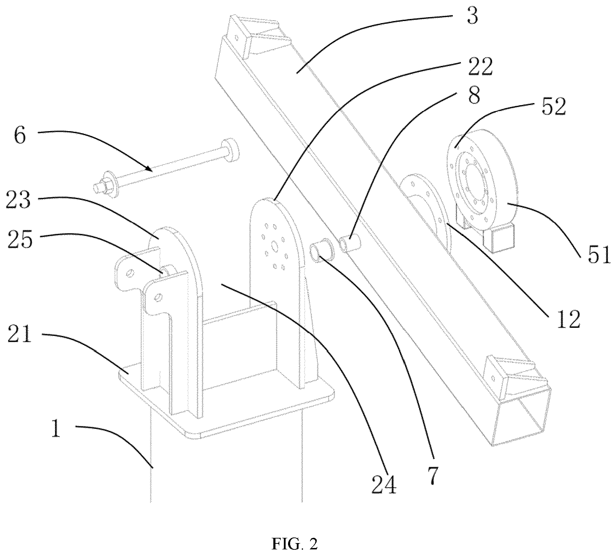

Referring to FIG. 2 to FIG. 4, in some embodiments, the base 2 comprises a base plate 21, whereby a first support plate 22 and a second support plate 23 are vertically arranged on both sides of the base plate 21. The first support plate 22, the second support plate 23, and the base plate 21 constitute a receiving cavity 24. The driving device 5 and the rotating beam 3 are arranged within the receiving cavity 24. The driving device 5 is arranged near the first support plate 22, and the rotating beam 3 is arranged near the second support plate 23.

The driving device 5 comprises a housing 51, a rotating body 52 which is provided within the housing 51 and is configured to rotate relative to the housing 51, and a motor installed on the housing 51. The motor is used to drive the rotating body 52 to rotate. The housing 51 is fixed to the first support plate 22, and the rotating body 52 is connected to the rotating beam 3. In this embodiment, the driving device 5 and the rotating beam 3 are arranged in the receiving cavity 24, resulting in a compact structure, with small occupied space, fewer components, reduced risk of jamming, easy installation, and low maintenance costs.

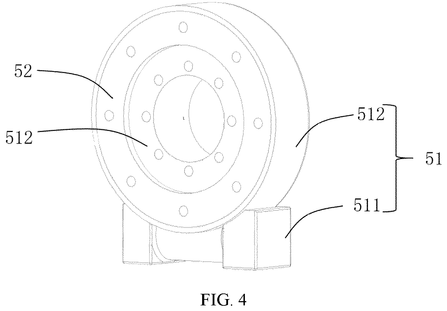

Referring to FIG. 4, in this embodiment, the driving device 5 comprises a rotary drive, which comprises a housing 51 and a worm-gear mechanism provided inside the housing 51. The worm-gear mechanism comprises a worm and a worm wheel meshing with the worm. The worm wheel constitutes the rotating body 52, and the worm is connected to the motor's driving end. In this embodiment, the driving device 5 adopts a worm-gear type rotary drive. The housing 51 comprises a first housing 511 that accommodates the worm and a second housing 512 that accommodates the worm wheel. The rotating body 52 is provided at one end of the second housing 512 and is connected to the rotating beam 3. The other axial end of the second housing 512 is fixed to the first support plate 22, which improves the radial and axial load-bearing capacity of the driving device 5. Additionally, it has a reverse self-locking function and can withstand lateral and vertical forces transmitted by the flexible bearing body.

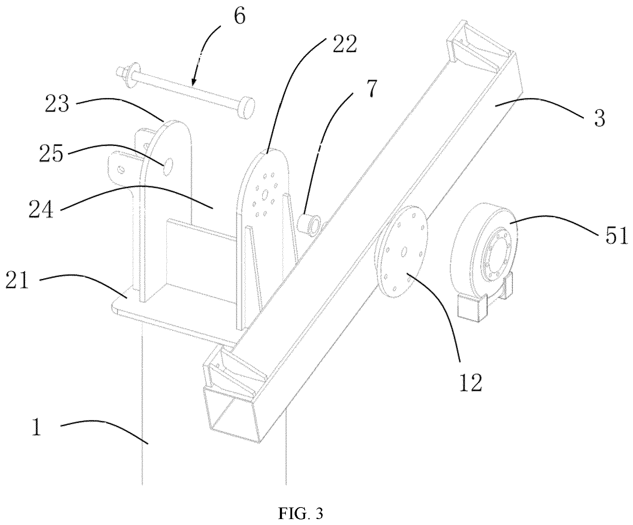

Referring to FIG. 2 and FIG. 3, in some embodiments, the first support plate 22, the second support plate 23, and the rotating beam 3 each have corresponding through-holes 25. A first bolt 6 is inserted from one side of the first support plate 22 sequentially through a through-hole 25 of the first support plate 22, the driving device 5, a through-hole 25 of the rotating beam 3, and a through-hole 25 of the second support plate 23, and then fastened. In this way, the first support plate 22 and the second support plate 23 are connected by the first bolt 6. In this embodiment, the first support plate 22 is connected to the second support plate 23 by the first bolt 6, so the two support plates jointly bear lateral forces, improving the lateral resistance of the base 2. The first bolt 6 passes through the through-hole 25 of the first support plate 22, the driving device 5, the through-hole 25 of the rotating beam 3, and the through-hole 25 of the second support plate 23. Thus, the force exerted by the housing 51 of the driving device 5 on the first support plate 22 is transmitted to the second support plate 23 via the first bolt 6, ensuring that the first support plate 22 and the second support plate 23 jointly bear the force, avoiding local stress concentration on the base 2, resulting in less deformation of the base 2, and improving the load-bearing capacity of the base 2.

Referring to FIG. 2 to FIG. 5, in the above embodiments, a bearing 7 is provided in the through-hole 25 of the second support plate 23. The bearing 7 features a bearing cavity 71. A sleeve 8 is fixedly provided in the through-hole 25 of the rotating beam 3, and both ends of the sleeve 8 extend beyond the rotating beam 3. The first bolt 6 passes through the inside of the sleeve 8, with one end of the sleeve 8 inserted into the bearing cavity 71 and able to rotate around the axis of the through-hole 25 on the second support plate 23. Preferably, the part of the sleeve 8 extending beyond the rotating beam 3 is welded to the edge of the through-hole 25 of the rotating beam 3.

In this embodiment, the bearing and the sleeve are configured in a way that the first bolt only needs to bear a tensile force, without bearing a vertical shear force. The stress state is simple, eliminating the risk of the first bolt being damaged under complex stress conditions. Simultaneously, the sleeve and the bearing can reduce the deformation of the base and the friction with the through-hole on the second support plate when the rotating beam rotates, making the rotation stable and smooth.

Referring to FIG. 2 to FIG. 5, in the above embodiments, the bearing 7 comprises a circular column section 72 and a first annular section 73 provided on the outer wall of one end of the circular column section 72. The outer diameter of the first annular section 73 is greater than the diameter of the through-hole 25 on the second support plate 23. The circular column section 72 is inserted into the through-hole 25 on the second support plate 23 from the receiving cavity 24, and one end of the sleeve 8 is inserted into the bearing cavity 71, with the rotating beam 3 and the first annular section 73 able to restrict the axial movement of the bearing 7.

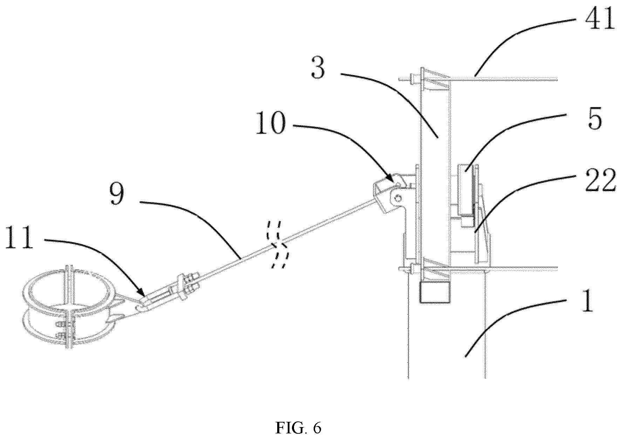

Referring to FIG. 1 and FIG. 6, in some embodiments, the flexible tracking bracket also comprises a diagonal cable 9. One end of the diagonal cable 9 is connected to the second support plate 23, and the other end is connected to the base surface. One end of the diagonal cable 9 is connected to the second support plate 23 and exerts a pulling force on the second support plate 23. The force borne by the second support plate 23 is partially transmitted to the first support plate 22 via the first bolt 6, causing the entire base 2 to bear the force jointly, avoiding local stress concentration on the base 2, and improving the load-bearing capacity of the base 2.

In this embodiment, the diagonal cable is configured can enhance the overall tensile capacity of the flexible tracking bracket, reduce the requirements for the load-bearing capacity of the column and the base, save materials, and reduce costs.

Referring to FIG. 6, in the above embodiments, the diagonal cable 9 is connected to the second support plate 23 via a first connection structure 10 and connected to the base surface via a second connection structure 11. One end of the diagonal cable 9 is connected to the second support plate 23 and exerts a pulling force on the second support plate 23. The force borne by the second support plate 23 is partially transmitted to the first support plate 22 via the first bolt 6, causing the entire base 2 to bear the force jointly, avoiding local stress concentration on the base 2, and improving the load-bearing capacity of the base 2. In this embodiment, the first connection structure 10 and the second connection structure 11 are configured to reduce stress concentration, making the force distribution at both ends of the diagonal cable 9 uniform, reducing the risk of a detachment of the diagonal cable 9 and the deformation of the base 2.

In some embodiments, the rotating body 52 is connected to the side of the rotating beam 3 through a connecting piece.

Referring to FIG. 2 to FIG. 4, in the above embodiments, the connecting piece is a flange 12. One end of the flange 12 is fixedly connected to the rotating body 52 via one or more second bolts, and the other end is welded to a side of the rotating beam 3.

In this embodiment, the flange 12 is connected to the rotating body 52 via second bolts, facilitating installation and disassembly. Welding to the rotating beam 3 avoids weakening the cross-sectional strength by connecting through-holes on the rotating beam 3.

In some embodiments, the connecting piece is a hollow tube. The side wall of the rotating beam 3 facing the driving device 5 is provided with a protrusion, which is inserted into the hollow tube and fixed by a fastener that passes through the protrusion and the side wall of the hollow tube.

In this embodiment, the protrusion provided on the rotating beam 3 can be integrally formed with the rotating beam 3 or pre-welded onto the rotating beam. The fastener can be, but is not limited to, a bolt, a rivet, or a pin, reducing on-site installation procedures and facilitating disassembly and maintenance.

It should be noted that the above embodiments may be freely combined as needed. The above are only preferred embodiments of this disclosure. It should be pointed out that for those skilled in the art, several improvements and modifications can be made without departing from the principle of this disclosure. These improvements and modifications should also be regarded as the protection scope of this disclosure.

## Claims

1. A flexible tracking bracket, comprising:
columns (1), wherein multiple columns (1) are spaced apart on a base surface;
bases (2), wherein each base (2) is provided at a top of each column (1);
rotating beams (3), pivotally arranged on the bases (2);
flexible bearing bodies, comprising at least two bearing cables (41), wherein each end of each bearing cable (41) is connected between two adjacent rotating beams (3), and the flexible bearing bodies are used to support photovoltaic modules (13);
driving devices (5), wherein each base (2) is equipped with a driving device (5), and the driving device (5) comprises a driving end, connected to a corresponding rotating beam (3), and multiple driving devices (5) synchronously drive the corresponding rotating beams (3) to rotate;
**characterized in that**
the base (2) comprises a base plate (21), and further comprises a first support plate (22) and a second support plate (23) that are both vertically arranged on two sides of the base plate (21); wherein the first support plate (22), the second support plate (23), and the base plate (21) constitute a receiving cavity (24), and the driving device (5) and the rotating beam (3) are arranged within the receiving cavity (24), and the driving device (5) is arranged close to the first support plate (22), and the rotating beam (3) is arranged close to the second support plate (23);
the driving device (5) comprises a housing (51), a rotating body (52) arranged within the housing (51) that can rotate relative to the housing (51), and a motor mounted on the housing (51), wherein the motor is used to drive the rotating body (52) to rotate, and the housing (51) is fixed on the first support plate (22), and the rotating body (52) is connected to the rotating beam (3); and
the driving device (5) comprises a rotary drive, wherein the rotary drive comprises the housing (51) and a worm-gear mechanism arranged within the housing (51), and the worm-gear mechanism comprises a worm and a worm wheel meshing with the worm, and the worm wheel constitutes the rotating body (52), and the worm is connected to a driving end of the motor.

2. The flexible tracking bracket according to claim 1, **characterized in that**,
the first support plate (22), the second support plate (23), and the rotating beam (3) is each provided with a through-hole (25) wherein the through-holes (25) are corresponding to each other, and a first bolt (6) is inserted from one side of the first support plate (22) sequentially into the through-hole (25) of the first support plate (22), the driving device (5), the through-hole (25) of the rotating beam (3), and the through-hole (25) of the second support plate (23), and then fastened, thus the first support plate (22) and the second support plate (23) are connected by the first bolt (6).

3. The flexible tracking bracket according to claim 2, **characterized in that**,
the through-hole (25) of the second support plate (23) is provided with a bearing (7), wherein the bearing (7) features a bearing cavity (71), and a sleeve (8) is fixed within the through-hole (25) of the rotating beam (3), and two ends of the sleeve (8) extend beyond the rotating beam (3), and the first bolt (6) passes through an inside of the sleeve (8), and one end of the sleeve (8) is inserted into the bearing cavity (71), and is configured to rotate around an axis of the through-hole (25) of the second support plate (23).

4. The flexible tracking bracket according to claim 3, **characterized in that**,
the bearing (7) comprises a circular column section (72) and a first annular section (73) provided on an outer wall of one end of the circular column section (72), wherein an outer diameter of the first annular section (73) is greater than a diameter of the through-hole (25) of the second support plate (23), and the circular column section (72) is inserted into the through-hole (25) of the second support plate (23) from the receiving cavity (24), then one end of the sleeve (8) is inserted into the bearing cavity (71), and the rotating beam (3) and the first annular section (73) is configured to restrict an axial movement of the bearing (7).

5. The flexible tracking bracket according to claim 1, **characterized by** further comprising a diagonal cable (9), wherein one end of the diagonal cable (9) is connected to the second support plate (23), and another end of the diagonal cable (9) is connected to the base surface.

6. The flexible tracking bracket according to claim 5, **characterized in that**,
the diagonal cable (9) is connected to the second support plate (23) through a first connection structure (10) and connected to the base surface through a second connection structure (11).

7. The flexible tracking bracket according to claim 1, **characterized in that**,
the rotating body (52) is connected to a side of the rotating beam (3) through a connecting piece.

8. The flexible tracking bracket according to claim 7, **characterized in that**,
the connecting piece is a flange (12), wherein one end of the flange (12) is fixedly connected to the rotating body (52) through one or more second bolts, and another end is welded to the side of the rotating beam (3).

9. The flexible tracking bracket according to claim 7, **characterized in that**,
the connecting piece is a hollow tube, wherein a side wall of the rotating beam (3) facing the driving device (5) is provided with a protrusion, and the protrusion extends into the hollow tube and is fixed by a fastener passing through the protrusion and a side wall of the hollow tube.

## Patentansprüche

1. Eine flexible Nachführhalterung, umfassend:
Säulen (1), wobei mehrere Säulen (1) auf einer Grundfläche beabstandet angeordnet sind;
Sockel (2), wobei jeder Sockel (2) an der Oberseite jeder Säule (1) angebracht ist;
Drehbalken (3), die schwenkbar auf den Sockeln (2) angeordnet sind;
flexible Lagerkörper, die mindestens zwei Tragseile (41) umfassen, wobei jedes Ende jedes Tragseils (41) zwischen zwei benachbarten Drehbalken (3) verbunden ist, und die flexiblen Lagerkörper zur Aufnahme von Photovoltaikmodulen (13) ausgebildet sind;
Antriebsvorrichtungen (5), wobei jeder Sockel (2) mit einer Antriebsvorrichtung (5) ausgestattet ist, und die Antriebsvorrichtung (5) ein Antriebsende umfasst, das mit einem entsprechenden Drehbalken (3) verbunden ist, und mehrere Antriebsvorrichtungen (5) die entsprechenden Drehbalken (3) synchron in Rotation versetzen;
**dadurch gekennzeichnet, dass**
der Sockel (2) eine Grundplatte (21) sowie eine erste Trägerplatte (22) und eine zweite Trägerplatte (23) umfasst, die beide vertikal an zwei Seiten der Grundplatte (21) angeordnet sind; wobei die erste Trägerplatte (22), die zweite Trägerplatte (23), und die Grundplatte (21) einen Aufnahmehohlraum (24) bilden, und die Antriebsvorrichtung (5) sowie der Drehbalken (3) innerhalb des Aufnahmehohlraums (24) angeordnet sind, und die Antriebsvorrichtung (5) nahe an der ersten Trägerplatte (22), und der Drehbalken (3) nahe an der zweiten Trägerplatte (23) angeordnet ist;
die Antriebsvorrichtung (5) ein Gehäuse (51), einen im Gehäuse (51) angeordneten, relativ zum Gehäuse (51) drehbaren Drehkörper (52), und einen am Gehäuse (51) montierten Motor umfasst, wobei der Motor dazu ausgebildet ist, den Drehkörper (52) in Rotation zu versetzen, und das Gehäuse (51) auf der ersten Trägerplatte (22) befestigt ist, und der Drehkörper (52) mit dem Drehbalken (3) verbunden ist; und
die Antriebsvorrichtung (5) einen Drehantrieb umfasst, wobei der Drehantrieb das Gehäuse (51) und einen im Gehäuse (51) angeordneten Schneckengetriebemechanismus umfasst, und der Schneckengetriebemechanismus eine Schnecke und ein mit der Schnecke kämmendes Schneckenrad umfasst, und das Schneckenrad den Drehkörper (52) bildet, und die Schnecke mit einem Antriebsende des Motors verbunden ist.

2. Die flexible Nachführhalterung nach Anspruch 1, **dadurch gekennzeichnet, dass**
die erste Trägerplatte (22), die zweite Trägerplatte (23), und der Drehbalken (3) jeweils mit einer Durchgangsbohrung (25) versehen sind, wobei die Durchgangsbohrungen (25) einander entsprechen, und ein erster Bolzen (6) von einer Seite der ersten Trägerplatte (22) nacheinander in die Durchgangsbohrung (25) der ersten Trägerplatte (22), die Antriebsvorrichtung (5), die Durchgangsbohrung (25) des Drehbalkens (3), und die Durchgangsbohrung (25) der zweiten Trägerplatte (23) eingeführt und anschließend verschraubt wird, wodurch die erste Trägerplatte (22) und die zweite Trägerplatte (23) durch den ersten Bolzen (6) verbunden werden.

3. Die flexible Nachführhalterung nach Anspruch 2, **dadurch gekennzeichnet, dass**
die Durchgangsbohrung (25) der zweiten Trägerplatte (23) mit einem Lager (7) versehen ist, wobei das Lager (7) einen Lagerhohlraum (71) aufweist, und eine Hülse (8) in der Durchgangsbohrung (25) des Drehbalkens (3) befestigt ist, und zwei Enden der Hülse (8) über den Drehbalken (3) hinausragen, und der erste Bolzen (6) durch die Innenseite der Hülse (8) verläuft, und ein Ende der Hülse (8) in den Lagerhohlraum (71) eingesetzt ist, und so konfiguriert ist, dass sie sich um eine Achse der Durchgangsbohrung (25) der zweiten Trägerplatte (23) drehen kann.

4. Die flexible Nachführhalterung nach Anspruch 3, **dadurch gekennzeichnet, dass**
das Lager (7) einen kreisförmigen Säulenabschnitt (72) und einen ersten ringförmigen Abschnitt (73) umfasst, der an der Außenwand eines Endes des kreisförmigen Säulenabschnitts (72) angeordnet ist, wobei der Außendurchmesser des ersten ringförmigen Abschnitts (73) größer ist als ein Durchmesser der Durchgangsbohrung (25) der zweiten Trägerplatte (23), und der kreisförmige Säulenabschnitt (72) von dem Aufnahmehohlraum (24) aus in die Durchgangsbohrung (25) der zweiten Trägerplatte (23) eingeführt wird, dann ein Ende der Hülse (8) in den Lagerhohlraum (71) eingeführt wird, und der Drehbalken (3) und der erste ringförmige Abschnitt (73) so konfiguriert sind, dass sie eine axiale Bewegung des Lagers (7) einschränken.

5. Die flexible Nachführhalterung nach Anspruch 1, **dadurch gekennzeichnet, dass** sie ferner ein diagonales Kabel (9) umfasst, wobei ein Ende des diagonalen Kabels (9) mit der zweiten Trägerplatte (23) verbunden ist, und ein anderes Ende des diagonalen Kabels (9) mit der Grundfläche verbunden ist.

6. Die flexible Nachführhalterung nach Anspruch 5, **dadurch gekennzeichnet, dass**
das diagonale Kabel (9) über eine erste Verbindungsstruktur (10) mit der zweiten Trägerplatte (23) und über eine zweite Verbindungsstruktur (11) mit der Grundfläche verbunden ist.

7. Die flexible Nachführhalterung nach Anspruch 1, **dadurch gekennzeichnet, dass**
der Drehkörper (52) über ein Verbindungsstück mit einer Seite des Drehbalkens (3) verbunden ist.

8. Die flexible Nachführhalterung nach Anspruch 7, **dadurch gekennzeichnet, dass**
das Verbindungsstück ein Flansch (12) ist, wobei ein Ende des Flansches (12) mittels eines oder mehrerer zweiter Bolzen fest mit dem Drehkörper (52) verbunden ist, und das andere Ende an die Seite des Drehbalkens (3) geschweißt ist.

9. Die flexible Nachführhalterung nach Anspruch 7, **dadurch gekennzeichnet, dass**
das Verbindungsstück ein Hohlrohr ist, wobei eine der Antriebsvorrichtung (5) zugewandte Seitenwand des Drehbalkens (3) mit einem Vorsprung versehen ist, und der Vorsprung in das Hohlrohr hineinragt und durch ein Befestigungselement fixiert ist, das durch den Vorsprung und eine Seitenwand des Hohlrohrs verläuft.

## Revendications

1. Support de suivi flexible, comprenant :
des colonnes (1), plusieurs colonnes (1) étant espacées sur une surface de base ;
des embases (2), chaque embase (2) étant prévue au sommet de chaque colonne (1) ;
des poutres rotatives (3), disposées de manière pivotante sur les embases (2) ;
des corps de support flexibles, comprenant au moins deux câbles de support (41), chaque extrémité de chaque câble de support (41) étant reliée entre deux poutres rotatives (3) adjacentes, et les corps de support flexibles étant utilisés pour supporter des modules photovoltaïques (13) ;
des dispositifs d'entraînement (5), chaque embase (2) étant équipée d'un dispositif d'entraînement (5), et le dispositif d'entraînement (5) comprenant une extrémité d'entraînement, reliée à une poutre rotative (3) correspondante, et plusieurs dispositifs d'entraînement (5) entraînant de manière synchrone les poutres rotatives (3) correspondantes en rotation ;
**caractérisé en ce que**
l'embase (2) comprend une plaque de base (21), et comprend en outre une première plaque de support (22) et une seconde plaque de support (23) qui sont toutes deux disposées verticalement de part et d'autre de la plaque de base (21) ; la première plaque de support (22), la seconde plaque de support (23) et la plaque de base (21) constituant une cavité de réception (24), et le dispositif d'entraînement (5) et la poutre rotative (3) étant disposés à l'intérieur de la cavité de réception (24), le dispositif d'entraînement (5) étant disposé à proximité de la première plaque de support (22), et la poutre rotative (3) étant disposée à proximité de la seconde plaque de support (23) ;
le dispositif d'entraînement (5) comprend un boîtier (51), un corps rotatif (52) disposé à l'intérieur du boîtier (51) pouvant tourner par rapport au boîtier (51), et un moteur monté sur le boîtier (51), le moteur étant utilisé pour entraîner le corps rotatif (52) en rotation, le boîtier (51) étant fixé sur la première plaque de support (22), et le corps rotatif (52) étant relié à la poutre rotative (3) ; et
le dispositif d'entraînement (5) comprend un entraînement rotatif, l'entraînement rotatif comprenant le boîtier (51) et un mécanisme à vis sans fin disposé à l'intérieur du boîtier (51), le mécanisme à vis sans fin comprenant une vis sans fin et une roue à vis sans fin en prise avec la vis sans fin, la roue à vis sans fin constituant le corps rotatif (52), et la vis sans fin étant reliée à une extrémité d'entraînement du moteur.

2. Support de suivi flexible selon la revendication 1, **caractérisé en ce que**,
la première plaque de support (22), la seconde plaque de support (23) et la poutre rotative (3) sont chacune pourvues d'un trou traversant (25), les trous traversants (25) étant en correspondance les uns avec les autres, et un premier boulon (6) est inséré depuis un côté de la première plaque de support (22) successivement dans le trou traversant (25) de la première plaque de support (22), le dispositif d'entraînement (5), le trou traversant (25) de la poutre rotative (3), et le trou traversant (25) de la seconde plaque de support (23), puis serré, ainsi la première plaque de support (22) et la seconde plaque de support (23) sont reliées par le premier boulon (6).

3. Support de suivi flexible selon la revendication 2, **caractérisé en ce que**,
le trou traversant (25) de la seconde plaque de support (23) est pourvu d'un roulement (7), le roulement (7) comportant une cavité de roulement (71), et un manchon (8) est fixé à l'intérieur du trou traversant (25) de la poutre rotative (3), et les deux extrémités du manchon (8) dépassent de la poutre rotative (3), et le premier boulon (6) passe à l'intérieur du manchon (8), et une extrémité du manchon (8) est insérée dans la cavité de roulement (71), et est configurée pour tourner autour d'un axe du trou traversant (25) de la seconde plaque de support (23).

4. Support de suivi flexible selon la revendication 3, **caractérisé en ce que**,
le roulement (7) comprend une section cylindrique (72) et une première section annulaire (73) prévue sur une paroi externe d'une extrémité de la section cylindrique (72), un diamètre extérieur de la première section annulaire (73) étant supérieur à un diamètre du trou traversant (25) de la seconde plaque de support (23), et la section cylindrique (72) étant insérée dans le trou traversant (25) de la seconde plaque de support (23) depuis la cavité de réception (24), puis une extrémité du manchon (8) étant insérée dans la cavité de roulement (71), et la poutre rotative (3) et la première section annulaire (73) étant configurées pour limiter un mouvement axial du roulement (7).

5. Support de suivi flexible selon la revendication 1, **caractérisé en ce qu'**il comprend en outre un câble diagonal (9), une extrémité du câble diagonal (9) étant reliée à la seconde plaque de support (23), et une autre extrémité du câble diagonal (9) étant reliée à la surface de base.

6. Support de suivi flexible selon la revendication 5, **caractérisé en ce que**,
le câble diagonal (9) est relié à la seconde plaque de support (23) par l'intermédiaire d'une première structure de connexion (10) et relié à la surface de base par l'intermédiaire d'une seconde structure de connexion (11).

7. Support de suivi flexible selon la revendication 1, **caractérisé en ce que**,
le corps rotatif (52) est relié à un côté de la poutre rotative (3) par l'intermédiaire d'une pièce de connexion.

8. Support de suivi flexible selon la revendication 7, **caractérisé en ce que**,
la pièce de connexion est une bride (12), une extrémité de la bride (12) étant fixée de manière solidaire au corps rotatif (52) par l'intermédiaire d'un ou plusieurs deuxièmes boulons, et l'autre extrémité étant soudée au côté de la poutre rotative (3).

9. Support de suivi flexible selon la revendication 7, **caractérisé en ce que**,
la pièce de connexion est un tube creux, une paroi latérale de la poutre rotative (3) faisant face au dispositif d'entraînement (5) étant pourvue d'une saillie, et la saillie s'étendant à l'intérieur du tube creux et étant fixée par une attache traversant la saillie et une paroi latérale du tube creux.
